(19) **Europäisches Patentamt / European Patent Office / Office européen des brevets**

(11) **EP 3 646 121 B1**

(12) **FASCICULE DE BREVET EUROPEEN**

(45) Date de publication et mention
de la délivrance du brevet:
**06.10.2021 Bulletin 2021/40**

(51) Int Cl.:
**G03H 1/08** $^{(2006.01)}$ **G03H 1/22** $^{(2006.01)}$
**G02B 27/01** $^{(2006.01)}$

(21) Numéro de dépôt: **18737157.0**

(22) Date de dépôt: **13.06.2018**

(86) Numéro de dépôt international:
**PCT/EP2018/065666**

(87) Numéro de publication internationale:
**WO 2019/001968 (03.01.2019 Gazette 2019/01)**

(54) **PROCEDE DE GENERATION NUMERIQUE D'UN HOLOGRAMME, DISPOSITIF, EQUIPEMENT TERMINAL, SYSTEME ET PROGRAMME D'ORDINATEUR ASSOCIES**

VERFAHREN ZUR DIGITALEN GENERIERUNG EINES HOLOGRAMMS, VORRICHTUNG, ENDGERÄT, ZUGEHÖRIGES SYSTEM UND COMPUTERPROGRAMM

METHOD FOR DIGITALLY GENERATING A HOLOGRAM, DEVICE, TERMINAL DEVICE, ASSOCIATED SYSTEM AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2017 FR 1756004**

(43) Date de publication de la demande:
**06.05.2020 Bulletin 2020/19**

(73) Titulaire: **Fondation B-COM**
**35510 Cesson-Sévigné (FR)**

(72) Inventeurs:
• **GILLES, Antonin**
**35000 Rennes (FR)**
• **GIOIA, Patrick**
**35520 Servon sur Vilaine (FR)**

(74) Mandataire: **Jacobacci Coralis Harle**
**32, rue de l'Arcade**
**75008 Paris (FR)**

(56) Documents cités:
**US-A1- 2016 077 339**

• **GILLES ANTONIN ET AL: "Computer generated hologram from Multiview-plus-Depth data considering specular reflections", 2016 IEEE INTERNATIONAL CONFERENCE ON MULTIMEDIA & EXPO WORKSHOPS (ICMEW), IEEE, 11 juillet 2016 (2016-07-11), pages 1-6, XP032970836, DOI: 10.1109/ICMEW.2016.7574699**

**EP 3 646 121 B1**

**Description**

### 1. Domaine de l'invention

Le domaine de l'invention est celui de la génération numérique d'un hologramme à partir d'une scène tridimensionnelle réelle ou virtuelle, cet hologramme étant destiné à être restitué à un utilisateur à l'aide d'un dispositif d'affichage de type visiocasque (pour « Head Mounted Display », en anglais), qu'il porte sur sa tête et qui comprend un écran placé devant ses yeux.

L'invention peut notamment, mais non exclusivement, s'appliquer aux usages de la réalité virtuelle, lorsque l'observateur est immergé dans une scène virtuelle tridimensionnelle, ou de la réalité augmentée, lorsque l'image restituée à l'utilisateur superpose une image d'une scène virtuelle au monde réel qu'il perçoit à travers l'écran transparent de son casque (pour « see-through », en anglais).

### 2. Présentation de l'art antérieur

Pour l'affichage d'hologrammes en couleur et éventuellement animés, on connait un dispositif comprenant un ou plusieurs écrans à cristaux liquides ou LCD (pour « Liquid Crystal Display », en anglais) appelé SLM (pour « Spatial Light Modulator », en anglais) qui modulent un ou plusieurs faisceaux lasers en phase et / ou en amplitude. L'image ainsi produite est acheminée dans le champ visuel de l'observateur par un guide d'onde, ou simplement reflétée par un séparateur de faisceaux.

Un inconvénient de ce dispositif d'affichage est la faible résolution des écrans LCD, qui limite le champ visuel de l'observateur.

Pour pallier cet inconvénient sans augmenter la résolution des écrans d'un dispositif SLM, il est connu du document de T. Ichikawa et al., intitulé "CGH calculation with the ray tracing method for the Fourier transform optical system," et publié dans la revue Opt. Express, vol. 21, no. 26, pp. 32019-32031, en décembre 2013, de placer une lentille convergente entre le dispositif SLM et l'utilisateur de sorte à former un hologramme élargi, et donc offrir un champ visuel plus large à l'utilisateur. Cependant, du fait du passage des ondes lumineuses modulées par l'hologramme à travers la lentille, les rayons sont courbés et la perspective d'un objet de la scène n'est alors plus correcte, c'est-à-dire qu'elle ne correspond plus à celle qui avait été calculée au moment de la génération de l'hologramme. Face à ce problème, les auteurs ont proposé une adaptation de leur technique de génération d'hologramme, permettant de compenser l'inflexion des rayons en utilisant une approche basée points et une technique de tracé de rayons depuis le centre du plan de l'écran. Le document "Computer generated hologram from Multiview-plus-Depth data considering specular reflections", Gilles Antonin et al., 2016 IEEE International Conférence on Multimedia & Expo Workshops (ICMEW), pp.1-6 divulgue un procédé de génération numérique d'un hologramme en utilisant une approche basée plans.

### 3. Inconvénients de l'art antérieur

Un inconvénient de cette approche est que la génération de l'hologramme est basée sur une approche par points, ce qui est d'autant plus coûteux en temps de calcul que la scène comprend un plus grand nombre de points.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution de génération et d'affichage d'un hologramme qui permette d'élargir le champ visuel d'un écran holographique, de façon rapide et peu complexe.

Un autre objectif de l'invention est de générer un hologramme de petite taille, adaptée à celle des écrans d'un visiocasque, à partir d'une scène de taille réelle, bien supérieure.

### 5. Exposé de l'invention

Ces objectifs, ainsi que d'autres qui apparaîtront par la suite, sont atteints à l'aide d'un procédé de génération numérique d'un hologramme d'une scène tridimensionnelle dans un plan, dit plan écran, d'un écran d'un dispositif d'affichage d'hologramme destiné à être porté par un utilisateur, ledit écran étant éclairé par une onde lumineuse cohérente plane, une lentille convergente étant agencée entre l'écran et ledit utilisateur, de sorte que l'hologramme se forme dans le plan de l'écran, ledit procédé comprenant les étapes suivantes :

-   Obtention d'une carte d'intensités et une carte de profondeurs de la scène correspondant au point de vue de l'utilisateur ;

- Projection selon un modèle de projection perspective inverse d'une caméra virtuelle colocalisée avec l'utilisateur, des points de la carte d'intensités sur une pluralité de plans parallèles au plan écran dans un référentiel de l'écran, un dit plan étant associé à une valeur de profondeur comprise entre une valeur minimale et une valeur maximale de la carte de profondeurs, un point de la carte d'intensités étant projeté sur le plan de la pluralité de plans associé à la valeur de profondeur dudit point dans la carte de profondeur;

- Compensation d'une distorsion induite par la lentille convergente sur l'hologramme par modification de la pluralité de plans de la scène, un point d'un dit plan, dit point image d'un point objet par conjugaison de ladite lentille convergente, étant remplacé par ledit point objet ;

- depuis la pluralité de plans modifiés, dits plans objets, propagation d'une onde lumineuse échantillonnée complexe vers le plan écran et sommation des ondes lumineuses propagées;

Avec l'invention, on réalise une projection perspective de la scène virtuelle en positionnant une caméra virtuelle au niveau des yeux de l'utilisateur, de façon à reproduire le champ de vision élargi que procure la lentille convergente et ainsi exploiter toute l'information de la scène contenue dans ce champ élargi pour générer un hologramme sous la forme d'une pluralité de plans de la scène.

Les plans de la scène ainsi obtenus sont ensuite corrigés pour compenser la distorsion induite par la lentille convergente en termes de courbure de rayons lumineux. Les ondes lumineuses émises par chacun des plans corrigés sont enfin propagées vers le plan écran et sommées pour former l'hologramme.

L'invention propose donc une approche tout-à-fait nouvelle de génération d'hologramme qui adapte une technique basée plans, par nature moins complexe qu'une technique basée points, de façon à produire un affichage de l'hologramme avec un champ de vision élargi.

Du fait de la projection perspective qu'elle met en œuvre, l'invention permet en outre de restituer une scène 3D de taille bien supérieure à celle de l'écran.

Selon une première option, on utilise une source lumineuse sphérique pour éclairer le plan de l'écran à travers la lentille. Dans ce cas, elle est placée dans le plan focal de la lentille, ce qui permet d'avoir une onde plane au niveau de l'écran de l'hologramme.

Selon une deuxième option, on génère une onde plane cohérente avec un laser et on éclaire directement l'écran sans passer par la lentille.

Selon un aspect de l'invention, l'étape de propagation de l'onde lumineuse émise par un plan objet comprend un contrôle d'un facteur d'échelle entre un pas d'échantillonnage du plan objet et un pas d'échantillonnage du plan écran.

Du fait de la projection perspective inverse des points de la scène tridimensionnelle selon le modèle de projection de la caméra virtuelle, tous les plans de la scène 3D n'ont pas le même pas d'échantillonnage, bien qu'ils aient la même résolution. Autrement dit, les points du plan le plus lointain sont plus gros que ceux du plan le plus proche. Le contrôle de facteur d'échelle selon l'invention permet de prendre en compte ce changement d'échelle lors de la propagation des ondes lumineuses des plans de la scène vers le plan écran.

Selon un autre aspect de l'invention, la propagation comprend une transformation de l'onde lumineuse émise par le plan objet par un noyau, calculé en fonction du facteur d'échelle.

Il s'agit par exemple de la transformée de Fresnel-Bluestein. Un avantage est que ce mode de réalisation permet de contrôler le grossissement indépendamment de la distance de propagation, de la longueur d'onde ou de la résolution du plan. De plus, elle s'exprime sous la forme d'un produit de convolution, qui peut être calculé efficacement en utilisant une Transformée de Fourier rapide. Un autre avantage d'un produit de convolution est que, du fait qu'il nécessite un passage dans le domaine de Fourier, il est aisé de lui ajouter un filtrage fréquentiel de sorte à supprimer des artéfacts, par exemple dus à des ordres de diffraction non désirés.

Selon un autre aspect de l'invention, l'étape de propagation comprend une première propagation de l'onde lumineuse émise par le plan objet jusqu'à un plan virtuel intermédiaire, puis une deuxième propagation du plan virtuel intermédiaire jusqu'au plan de l'écran, la première et la deuxième propagation étant réalisées à l'aide d'une transformée, telle que le facteur d'échelle entre un plan de départ et un plan d'arrivée dépend d'une distance entre les plans et le contrôle du facteur d'échelle comprend un placement du plan virtuel intermédiaire entre le plan objet et le plan de l'écran de sorte à respecter le facteur d'échelle entre le plan objet et le plan de l'écran.

Par exemple, la propagation est réalisée à l'aide d'une transformée dite de Fresnel double step.

Un avantage de cette méthode est qu'elle permet de contrôler le facteur d'échelle à l'aide de la position du plan virtuel c'est-à-dire en fonction de la distance parcourue lors de la première puis lors de la deuxième propagation. De plus, la Transformée de Fresnel s'exprime sous la simple forme d'une multiplication complexe suivie d'une Transformée de Fourier, et ne nécessite pas de doubler le nombre d'échantillons de la fenêtre de reconstruction. Elle peut donc être calculée de façon rapide.

Avantageusement, le plan virtuel intermédiaire est placé à une distance du plan de l'écran correspondant à la distance focale d'une caméra virtuelle dont la projection perspective inverse des points de la scène produirait la pluralité de plans modifiés et la sommation des ondes lumineuses propagées est réalisée dans le plan virtuel.

Un avantage de ce mode de réalisation est d'être beaucoup moins complexe. En effet, les ondes lumineuses de chaque plan sont propagées jusqu'à un plan virtuel unique, sommées, puis l'onde lumineuse résultante est propagée jusqu'au plan écran. Il s'agit d'une utilisation particulière de la transformée précédente, basée sur une approximation rendue possible par la résolution relativement faible des dispositifs d'affichage d'hologrammes actuels par rapport à la longueur d'onde de la lumière.

L'invention concerne également un dispositif adapté pour mettre en œuvre le procédé de génération d'un hologramme selon l'un quelconque des modes particuliers de réalisation définis ci-dessus. Ce dispositif pourra bien sûr comporter les différentes caractéristiques relatives au procédé selon l'invention. Ainsi, les caractéristiques et avantages de ce dispositif sont les mêmes que ceux du procédé de génération, et ne sont pas détaillés plus amplement.

Selon un mode particulier de réalisation de l'invention, un tel dispositif est compris dans un équipement terminal.

L'invention concerne aussi un équipement terminal comprenant :

- un module d'obtention d'informations de description d'une scène tridimensionnelle,

- un dispositif d'affichage d'un hologramme destiné à être porté par un observateur, ledit dispositif comprenant :

    - un écran, placé à une distance prédéterminée des yeux de l'observateur ;

    - une source lumineuse agencée de façon à éclairer ledit écran par une onde lumineuse cohérente plane, ledit écran étant apte à moduler les ondes lumineuses émises par la source en fonction de l'hologramme ;

    - une lentille convergente placée entre l'écran et ledit observateur de sorte que l'hologramme se forme dans le plan de l'écran ; et

    - un guide d'onde ou un séparateur de faisceaux apte à acheminer les ondes lumineuses modulées par l'écran dans le champ visuel de l'observateur.

Selon l'invention, l'équipement terminal comprend un dispositif de génération numérique d'hologramme selon l'invention.

Avantageusement, l'équipement terminal est de type visiocasque.

L'invention concerne aussi un système comprenant un équipement serveur comprenant un module d'obtention d'informations de description d'une scène tridimensionnelle, un dispositif selon l'invention de génération d'hologramme à partir de la scène tridimensionnelle et un module d'émission de données représentatives de l'hologramme généré. Il comprend en outre un équipement terminal comprenant un module de réception de données représentatives de l'hologramme et un dispositif d'affichage apte à afficher l'hologramme reçu, ledit dispositif comprenant :

- un écran, placé à une distance prédéterminée des yeux de l'observateur ;

- une source lumineuse agencée de façon à éclairer ledit écran par une onde lumineuse cohérente plane, ledit écran étant apte à moduler les ondes lumineuses émises par la source en fonction de l'hologramme ;

- une lentille convergente placée entre l'écran et ledit observateur de sorte que l'hologramme se forme dans le plan de l'écran ; et

- un guide d'onde ou un séparateur de faisceaux apte à acheminer les ondes lumineuses modulées par l'écran dans le champ visuel de l'observateur.

L'invention concerne aussi un programme d'ordinateur comportant des instructions pour la mise en œuvre des étapes d'un procédé de génération d'un hologramme tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif de génération d'un hologramme selon l'invention, éventuellement amovible, mémorisant respectivement un programme d'ordinateur mettant en œuvre un procédé de génération d'un hologramme, tel que décrit précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** présente de façon schématique un premier exemple de dispositif d'affichage d'un hologramme;

- la figure **2** présente de façon schématique un deuxième exemple de dispositif d'affichage d'un hologramme ;

- la figure **3** présente de façon plus détaillée un premier exemple d'agencement de la lentille convergente par rapport à l'écran du dispositif d'affichage ;

- la figure **4** présente de façon plus détaillée un deuxième exemple d'agencement de la lentille convergente par rapport à l'écran du dispositif d'affichage ;

- la figure **5** présente de façon schématique les étapes d'un procédé de génération numérique d'un hologramme selon l'invention ;

- la figure **6** illustre un exemple de projection perspective inverse de la scène tridimensionnelle sur une pluralité de plans parallèles au plan écran, selon l'invention ;

- la figure **7** illustre de façon schématique la conjugaison d'un point objet en un point image par une lentille convergente ;

- la figure **8** illustre de façon schématique un exemple de correction de la pluralité de plans de la scène 3D pour compenser la distorsion introduite par la lentille convergente, selon l'invention ;

- la figure **9** illustre de façon schématique un exemple de plan virtuel intermédiaire mis en œuvre pour contrôler le grossissement entre un plan de la scène et le plan écran, selon un premier mode de réalisation de l'invention ;

- la figure **10** illustre de façon schématique un exemple de plan virtuel commun à la pluralité de plans selon un deuxième mode de réalisation de l'invention ;

- la figure **11** illustre de façon schématique un exemple de structure matérielle d'un dispositif de génération numérique d'hologramme selon l'invention, lorsqu'il est intégré à un équipement terminal ; et

- la figure **12** illustre de façon schématique un deuxième exemple de structure matérielle d'un dispositif de génération numérique d'hologramme selon l'invention, lorsqu'il est intégré à un équipement serveur.

## 7. Description d'un mode de réalisation particulier de l'invention

Le principe général de l'invention repose sur la génération d'un hologramme à partir de la projection perspective d'une scène 3D depuis le point de vue d'un observateur, sur une pluralité de plans parallèles au plan écran, une correction des positions et de la taille des plans pour compenser la distorsion introduite par la lentille convergente accolée à l'écran et une propagation d'ondes lumineuses émises par les plans corrigés vers le plan écran, l'hologramme étant formé sur le plan écran par la somme des ondes lumineuses ainsi propagées.

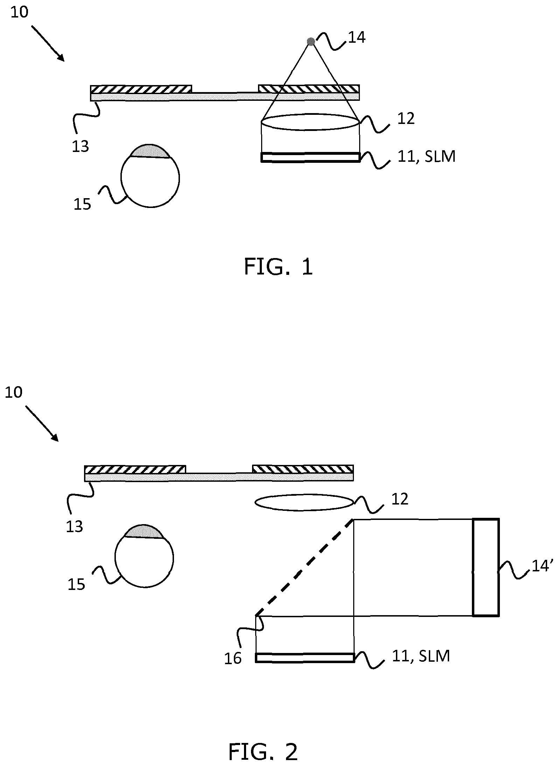

En relation avec la Figure **1,** on considère un dispositif d'affichage d'une image holographique ou d'une séquence d'images holographiques 10,. Il comprend un écran 11 apte à moduler la lumière émise par une source lumineuse S en fonction d'un hologramme H, par exemple d'un modulateur de lumière spatiale ou SLM.

Le dispositif d'affichage 10 comprend aussi une lentille convergente 12 de focale f, un guide d'onde 13 et une source lumineuse 14 cohérente ponctuelle. La lentille convergente 12 est située entre le SLM 11 et l'entrée du guide d'onde 13, la source lumineuse 14 est située dans le plan focal de la lentille 12, et l'œil de l'utilisateur 15 est situé en sortie du guide d'onde.

L'onde lumineuse sphérique émise par la source ponctuelle 14 est transformée en onde plane par la lentille 12 et vient illuminer le SLM 11. Cette onde plane est alors modulée par l'hologramme H affiché sur le SLM et elle est réfléchie en direction de la lentille 12. L'onde modulée passe alors à travers la lentille 12 puis elle est transmise par le guide d'onde 13 jusqu'à l'œil 15 de l'utilisateur.

En relation avec la Figure **2,** on présente un autre exemple de dispositif d'affichage 10, selon lequel la source lumineuse 14 est un laser qui génère une onde plane cohérente. Il comprend un séparateur de faisceaux 16, de sorte à éclairer directement l'écran sans passer par la lentille.

Le dispositif d'affichage 10 est destiné à être placé devant les yeux de l'utilisateur et porté sur sa tête. Avantageusement il peut être intégré à un équipement terminal ET de type visiocasque.

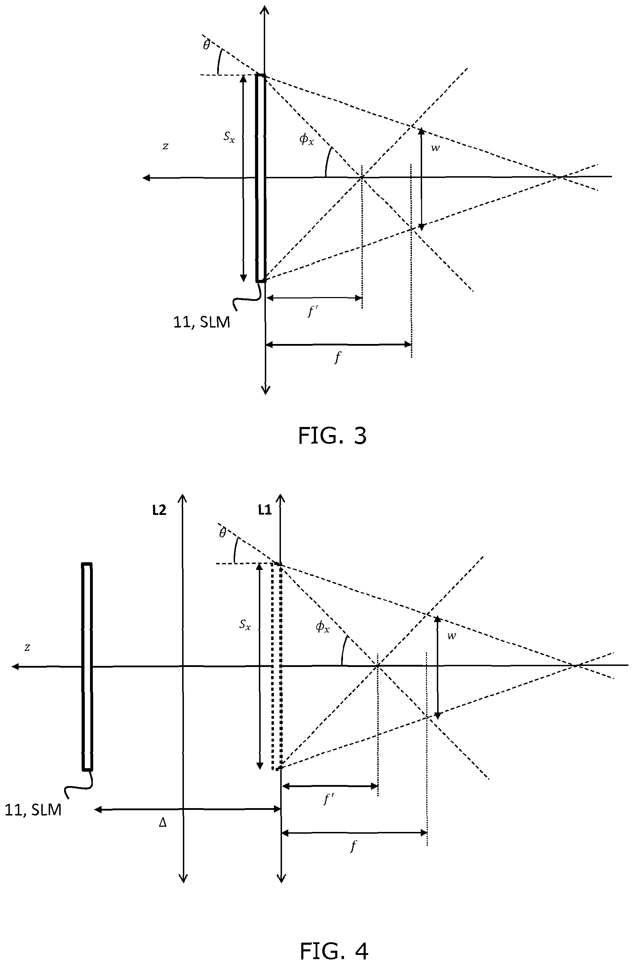

En relation avec la Figure **3** on décrit de façon plus détaillée l'agencement des différentes pièces de l'équipement 10 en omettant, par souci de simplicité, le guide d'onde. On considère un système de coordonnées (x,y,z) tel que la lentille convergente 12 soit située dans le plan (x,y,0). L'écran 11 est agencé de façon à ce que l'hologramme H se forme dans le plan de la lentille. Dans ce premier exemple, il est accolé à la lentille

Dans un deuxième exemple illustré par la Figure **4,** il est placé à une distance $\Delta$ de la lentille, de l'ordre de quelques cm dans le plan $(x,y,\Delta)$. Dans ce cas, l'équipement terminal ET comprend un système optique, par exemple une deuxième lentille 12', agencée de façon à ce que l'image par cette deuxième lentille de l'hologramme affiché sur l'écran soit formée dans le plan de la première lentille 12.

La taille de l'écran 11 est donnée par $(S_x, S_y) = (N_x.p, N_y.p)$, avec $(N_x, N_y)$ la résolution de l'écran, de l'ordre de quelques milliers de pixels par dimension, et p la taille des pixels, de l'ordre de quelques micromètres.

On désigne par $\theta$ l'angle de diffraction maximal de l'écran 11. Il s'exprime de la façon suivante :

$$\theta = \arcsin(\frac{\lambda}{2p})$$

, avec $\lambda$ la longueur d'onde de la source lumineuse 14, de l'ordre de quelques centaines de nanomètres.

Le champ de visualisation maximum est obtenu lorsque l'œil de l'observateur est situé dans le plan (x,y,-f'). Il est alors donné par

$$\phi_x = \arctan\left(\frac{s_x}{2f'}\right)$$

dans le plan horizontal et

$$\phi_y = \arctan\left(\frac{s_y}{2f'}\right)$$

dans le plan vertical, avec

$$f' = \begin{cases} \dfrac{S_x}{S_x + w}f, & S_x \geq S_y \\ \dfrac{S_y}{S_y + w}f, & S_x < S_y \end{cases}$$

$$w = 2f\tan(\theta)$$

Par conséquent, le champ de visualisation $(\phi_x, \phi_y)$ de l'hologramme peut être augmenté en diminuant la distance focale de la lentille.

En contrepartie de l'augmentation du champ de visualisation de l'hologramme, la lentille a pour effet de distordre la géométrie de la scène virtuelle. Il faut donc tenir compte de cette distorsion lors du calcul du flux vidéo holographique à afficher sur l'écran SLM 11.

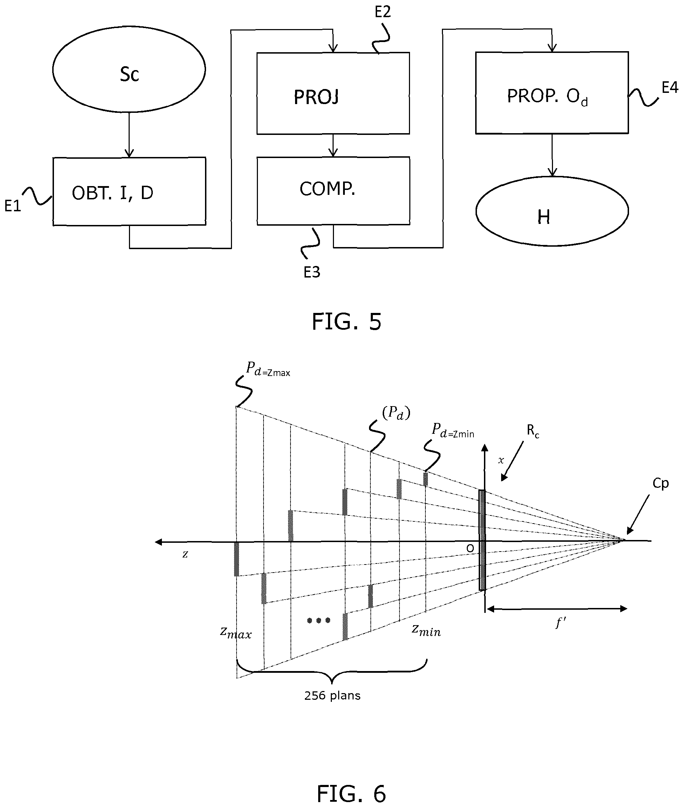

En relation avec la Figure **5,** on décrit les étapes d'un procédé de génération d'un hologramme selon un premier mode de réalisation de l'invention. Avantageusement, il est mis en œuvre par un dispositif 100 de génération d'un hologramme, agencé pour coopérer avec le dispositif d'affichage 10 des figures **1** et **2** et qui peut être avantageusement intégré à un équipement terminal de type visiocasque.

Au cours d'une étape E1, on obtient une carte d'intensités de couleur et une carte de profondeurs de la scène 3D réelle ou virtuelle correspondant au point de vue de l'observateur lorsqu'il est placé dans le plan (x, y, -f').Pour cela, on utilise une caméra 2D+Z virtuelle ou réelle, suivant la nature de la scène, avec un champ de visualisation de $\phi_x$ et $\phi_y$ dans le plan horizontal et vertical, respectivement, et une résolution de $(N_x, N_y)$. Si la scène est virtuelle, elle est par exemple décrite sous la forme d'un maillage ou d'un nuage de points, et on utilise alors une caméra virtuelle pour construire les cartes d'intensités et de profondeurs. Si la scène est réelle, on a recours à une caméra réelle.

Chaque point de la scène 3D de coordonnées (x,y,z) dans un référentiel de la caméra est ainsi projeté sur un élément d'image ou pixel de coordonnées (u,v) dans le plan image de la caméra, de telle sorte que :

$$\begin{pmatrix} u \\ v \\ 1 \end{pmatrix} \sim M \begin{pmatrix} x \\ y \\ z \\ 1 \end{pmatrix} = \begin{pmatrix} \dfrac{f'x}{zp} + u_0 \\ \dfrac{f'y}{zp} + u_0 \\ 1 \end{pmatrix},$$

où le symbole $\sim$ signifie que l'égalité vectorielle n'est définie qu'à un facteur scalaire près, en raison des coordonnées homogènes utilisées (de façon connue de l'homme du métier), et M correspond à la matrice de projection de cette caméra en coordonnées homogènes, donnée par :

$$M = \begin{bmatrix} f'/p & 0 & u_0 & 0 \\ 0 & f'/p & v_0 & 0 \\ 0 & 0 & 1 & 0 \end{bmatrix},$$

où $(u_0, v_0) = \left(\frac{N_x}{2}, \frac{N_y}{2}\right)$ sont les coordonnées du point focal principal de la caméra, exprimées dans le repère pixel (connu de l'homme du métier).

A l'issue de cette étape, on obtient une carte d'intensités I sous la forme d'une image de dimensions $(N_x, N_y)$ dont les valeurs d'intensités sont comprises entre 0 et 255 pour chaque couleur et une carte de profondeurs D de mêmes dimensions, dont les valeurs de profondeurs sont normalisées entre 0 pour une profondeur réelle de $z_{min}$ et 255, pour une profondeur réelle de $z_{max}$.

Au cours d'une étape E2, on projette les points de cartes d'intensités et de profondeurs selon un modèle de projection perspective inverse de la caméra virtuelle ou réelle dans le référentiel 3D Rc de la caméra, comme illustré par la Figure **6.**

Comme la profondeur D est encodée sur 8 bits, chaque pixel (u,v) de la carte d'intensités I et de profondeur d =D(u,v) est projeté en un point de coordonnées $P(x_u, y_u, z_d)$ dans le repère caméra $R_C = (O, x, y, z)$, de la façon suivante :

$$\begin{pmatrix} x_u \\ y_v \\ z_d \end{pmatrix} = \begin{pmatrix} \dfrac{(z_d + f')(u - u_0)p}{f'} \\ \dfrac{(z_d + f')(v - v_0)p}{f'} \\ \dfrac{255 - d}{255}(z_{max} - z_{min}) + z_{min} \end{pmatrix}$$

avec d=D(u,v). Le nuage de points ainsi projeté est donc naturellement découpé en un ensemble de N = 256 plans $P_{z_d}$ parallèles au plan de l'hologramme.

Cependant, on ne peut pas directement utiliser ce nuage de points pour le calcul de l'hologramme, du fait de la présence de la lentille 12.

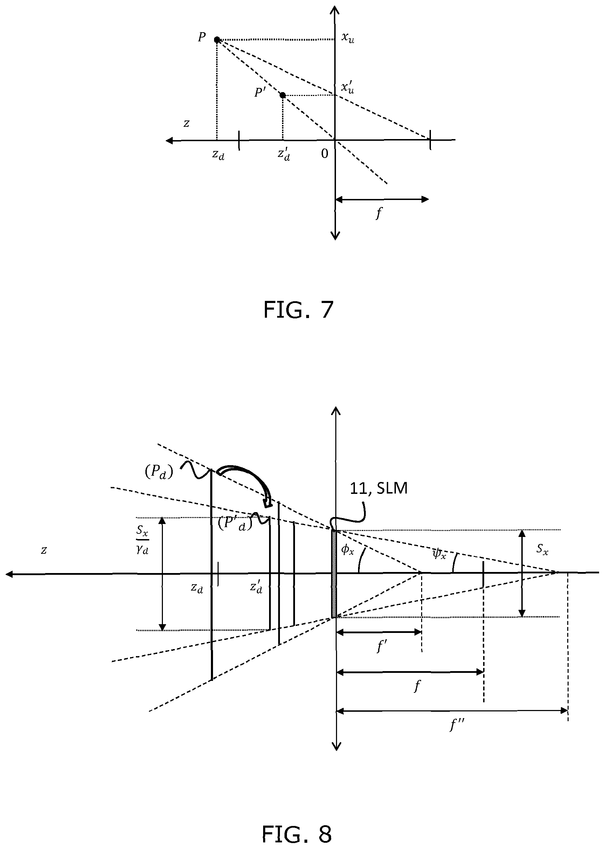

Au cours d'une étape E3, on modifie les coordonnées des points $P(x_u, y_u, z_d)$ de la pluralité de plans $(P_d)$, afin de compenser la distorsion induite par la lentille convergente 12, comme décrit ci-dessous en relation avec la Figure **7.**

On considère qu'un point $P(x_u, y_u, z_d)$ du plan $(P_d)$ est le point image d'un point objet P' par l'effet de conjugaison de la lentille 12. Il en résulte que, pour chaque point image P de coordonnées $(x_u, y_v, z_d)$, les coordonnées $(x'_u, y'_v, z'_d)$ du point objet P' correspondant sont données par l'expression suivante :

$$\begin{pmatrix} x'_u \\ y'_v \\ z'_d \end{pmatrix} = \begin{pmatrix} \dfrac{f}{z_d + f} x_u \\ \dfrac{f}{z_d + f} y_v \\ \dfrac{f}{z_d + f} z_d \end{pmatrix}$$

Cette expression correspond à la formule de conjugaison d'une lentille convergente, connue de l'homme de métier.

Comme illustré par la Figure **8,** on considère le plan objet $(P'_d)$ formé par les points objets P' de coordonnées $(x'_u, y'_v, z'_d)$. Le plan objet $(P'_d)$ et le plan image $(P_d)$ n'ont pas les mêmes dimensions. Or ils ont le même nombre de pixels (Nx, Ny), mais un pas d'échantillonnage différent. Ce sont les plans objets $(P'_d)$ qui vont être ensuite utilisés pour le calcul de l'hologramme H.

Sur la Figure **8,** on illustre la relation géométrique qui existe entre les plans objets $(P'_d)$ formés suite à l'étape de compensation des points des plans images $(P_d)$ et le plan écran 11.

On définit $\gamma_d$ un facteur d'échelle entre le plan objet $(P'_d)$ et le plan écran 11.

Il s'exprime de la façon suivante :

$$\gamma_d = \frac{p}{p'_d} = \frac{p}{\frac{f}{z_d + f} p_d} = \frac{p}{\frac{f}{z_d + f} \frac{(z_d + f')p}{f'}} = \frac{f'(z_d + f)}{f(z_d + f')}$$

La taille du plan objet ($P'_d$) est donc donnée par $\frac{S_x}{\gamma_d}$.

$\gamma_d$ a une valeur inférieure à 1. Il s'agit donc d'une réduction.

On considère maintenant la distance focale f'' d'une caméra virtuelle dont le modèle de projection inverse projetterait les points de la scène 3D sur la pluralité de plans objets ($Pd$) et $\psi_x$ l'angle du champ visuel correspondant.

On a, par application du théorème de Thalès,:

$$\frac{f''}{f'' + z'_d} = \frac{S_x}{S_y} = \gamma_d = \frac{f'(z_d + f)}{f(z_d + f')}$$

$$f'' = (f'' + z'_d) \frac{f'(z_d + f)}{f(z_d + f')}$$

$$f'' \left( 1 - \frac{f'(z_d + f)}{f(z_d + f')} \right) = \frac{f z_d}{z_d + f} \frac{f'(z_d + f)}{f(z_d + f')}$$

$$f'' \frac{z_d(f - f')}{f(z_d + f')} = \frac{f' z_d}{(z_d + f')}$$

$$f'' = \frac{f f'}{f - f'}$$

Si $S_x \geq S_y$, on a

$$f'' = \frac{S_x f}{w} = \frac{S_x}{2\tan(\theta)}$$

$$\psi_x = \arctan\left(\frac{S_x}{2f''}\right) = \theta$$

$$\psi_y = \arctan\left(\frac{S_y}{S_x}\tan(\theta)\right)$$

Inversement, si $S_x < S_y$, on a

$$f'' = \frac{S_y f}{w} = \frac{S_y}{2\tan(\theta)}$$

$$\psi_x = \arctan\left(\frac{S_x}{S_y}\tan(\theta)\right)$$

$$\psi_y = \arctan\left(\frac{S_y}{2f''}\right) = \theta$$

Au cours d'une étape E4, on propage les ondes lumineuses émises par les plans objet ($P'_d$) sur le plan de l'écran.

Le plan ($P'_d$) de profondeur d est considéré comme une source de lumière surfacique qui émet l'onde lumineuse donnée par :

$$o_d(x,y) = \sum_{\substack{u,v \\ D(u,v)=d}} \sqrt{I(u,v)} \exp(j\phi_{u,v}) h(x,y) * \delta(x - x'_u, y - y'_v)$$

où $\phi_{u,v} \in [0,2\pi]$ est la phase initiale permettant de contrôler la dispersion de la lumière émise par chaque point, h est une fonction fenêtre permet de contrôler leur taille, et $\delta$ est l'impulsion de Dirac.

Dans un mode de réalisation, la phase $\phi_{u,v}$ peut être définie comme une variable aléatoire uniforme, permettant un rendu diffus de la scène, mais d'autres distributions peuvent être utilisées. De la même façon, plusieurs fonctions de fenêtrage peuvent être utilisées pour h. Un mode de réalisation est d'utiliser une distribution gaussienne :

$$h(x,y) = \exp\left(-\frac{x^2 + y^2}{2\sigma^2}\right),$$

mais on aurait également pu utiliser une fenêtre rectangulaire ou une fenêtre de Hann.

Pour simplifier les calculs, $o_d$ est échantillonnée sur une grille régulière de résolution($N_x, N_y$). En relation avec la Figure **8,** on définit le pas d'échantillonnage sur le plan ($P'_d$) comme suit :

$$p'_d = \frac{p}{\gamma_d} = \begin{cases} \dfrac{2(z'_d + f'')\tan(\theta)}{N_x}, & S_x \geq S_y \\[2ex] \dfrac{2(z'_d + f'')\tan(\theta)}{N_y}, & S_x < S_y \end{cases}$$

La dernière étape du calcul de l'hologramme consiste à propager la lumière émise par la scène dans le plan de l'écran 11. Pour cela, les ondes lumineuses émises par chaque plan sont propagées numériquement jusqu'au plan de l'écran et sommées pour obtenir l'hologramme H de la scène, tel que

$$H(x,y) = \sum_d P_{z'_d,\gamma_d}\{o_d\}(x,y)$$

avec $P_{z'_d,\gamma_d}$ une formule de propagation de la lumière permettant de contrôler le grossissement $\gamma_d$ entre le pas d'échantillonnage $p'_d$ sur le plan objet, dit plan source, et le pas d'échantillonnage $p$ sur le plan de l'hologramme, dit plan de destination.

Selon un premier mode de réalisation de l'invention, cette propagation est réalisée à l'aide d'une technique de propagation dite de Fresnel-Bluestein, connue de l'homme de métier et par exemple décrite dans le document de Restrepo et al. , intitulé "Magnified reconstruction of digitally recorded holograms by Fresnel-Bluestein transform,", publié dans la revue « Appl. Opt. », vol. 49, no. 33, pp. 6430-6435, en novembre 2010, donnée par

$$P_{z'_d,\gamma_d}\{o_d\}(x,y) = \frac{\exp(j2\pi z'_d/\lambda)}{j\lambda z'_d} \exp\left(-\frac{j\pi}{\lambda z'_d}\gamma_d(1-\gamma_d)(x^2+y^2)\right) \mathcal{F}^{-1}\{\mathcal{F}\{f(\xi,\eta)\}\mathcal{F}\{g(\xi,\eta)\}\}$$

avec

$$f(\xi,\eta) = o_d(\xi,\eta) \exp\left(\frac{j\pi}{\lambda z'_d}(1-\gamma_d)\left(\xi^2+\eta^2\right)\right)$$

$$g(n,m) = \exp\left(\frac{j\pi}{\lambda z_d'}\gamma_d\left(\xi^2 + \eta^2\right)\right)$$

Où $\xi$ et $\eta$ sont les coordonnées d'un point dans le plan objet $(P'_d)$.

La propagation d'une onde lumineuse $o_d(\xi,\eta)$ du plan objet vers le plan de l'hologramme est calculée en effectuant un produit de convolution de l'onde avec un noyau g(n,m) qui dépend du facteur d'échelle entre les deux plans.

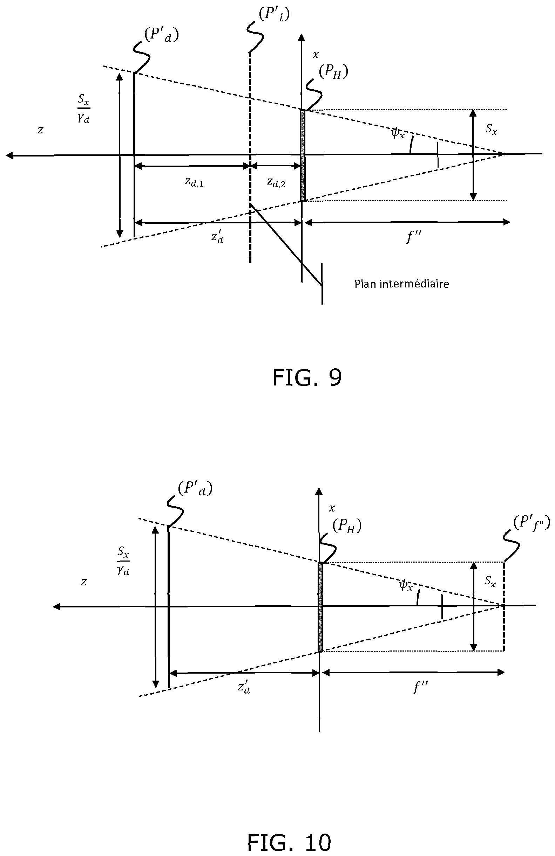

Selon un deuxième mode de réalisation de l'invention, qui va maintenant être décrit en relation avec la Figure **9,** cette propagation est réalisée en utilisant une transformée, appelée DSF (pour « Double-Step Fresnel diffraction », en anglais) définie de la façon suivante :

$$P_{z_d',\gamma_d}\{o_d\}(x,y) = SSF_{z_{d,2}}\left\{SSF_{z_{d,1}}\{o_d\}\right\}(x,y)$$

où $SSF_z$ est la propagation de Fresnel (1FFT), donnée par :

$$SSF_z\{o_d\}(x,y) = \frac{e^{jkz}}{jkz}e^{\frac{jk}{2z}(x^2+y^2)}\mathcal{F}\left\{o_d(\xi,\eta)e^{\frac{jk}{2z}(\xi^2+\eta^2)}\right\}(x,y)$$

La DSF consiste à appliquer successivement deux propagations de Fresnel, d'abord du plan objet $(P'_d)$ vers un plan virtuel intermédiaire $(P'_i)$, puis du plan virtuel intermédiaire au plan de l'hologramme. Le pas d'échantillonnage du plan destination de la propagation de Fresnel est fonction d'une distance entre le plan source et le plan destination. En conséquence, le fait de recourir à un plan virtuel intermédiaire, permet de choisir les deux distances $z_{d,1}$ et $z_{d,2}$ de sorte à contrôler le grossissement $\gamma_d$ entre le pas d'échantillonnage $p_d$ sur le plan objet et le pas d'échantillonnage $p$ sur le plan de de l'hologramme 11. Les distances intermédiaires $z_{d,1}$ et $z_{d,2}$ sont données par

$$\begin{cases} z_{d,1} = \dfrac{z_d'}{\gamma_d + 1} \\ z_{d,2} = \dfrac{\gamma_d z_d'}{\gamma_d + 1} \end{cases}$$

Par exemple, pour $z_d' = 1m$ et $\gamma_d$ = 0.25, on a $z_{d,1}$ = 0.8m et $z_{d,2}$ = 0.2m.

Selon un troisième mode de réalisation de l'invention, illustré par la Figure **10,** la propagation de la lumière est réalisée de nouveau avec la technique de la DSF, mais on exploite en outre le fait que les écrans SLM actuels ont une résolution faible, c'est-à-dire que leur pas d'échantillonnage $p$ est supérieur à 2 $\lambda$, ce qui est le cas pour la totalité des écrans SLMs du marché actuel. En effet, dans ce cas on peut considérer l'approximation suivante :

$$\tan\left(\arcsin\left(\frac{\lambda}{2p}\right)\right) \approx \frac{\lambda}{2p}$$ avec une erreur inférieure à 3%.

On a alors :

$$p_d' = \begin{cases} \dfrac{2(z_d' + f'')\tan\left(\arcsin\left(\frac{\lambda}{2p}\right)\right)}{N_x} \approx \dfrac{(z_d' + f'')\lambda}{N_x p}, & S_x \geq S_y \\ \dfrac{2(z_d' + f'')\tan\left(\arcsin\left(\frac{\lambda}{2p}\right)\right)}{N_y} \approx \dfrac{(z_d' + f'')\lambda}{N_y p}, & S_x < S_y \end{cases}$$

$$f'' = \begin{cases} \dfrac{N_x p}{2\tan\left(\arcsin\left(\frac{\lambda}{2p}\right)\right)} \approx \dfrac{N_x p^2}{\lambda}, & S_x \geq S_y \\ \dfrac{N_y p}{2\tan\left(\arcsin\left(\frac{\lambda}{2p}\right)\right)} \approx \dfrac{N_y p^2}{\lambda}, & S_x < S_y \end{cases}$$

On peut alors fixer

$$\begin{cases} z_{d,1} = z'_d + f'' \\ z_{d,2} = -f'' \end{cases},$$

On définit donc un seul plan virtuel intermédiaire $(P'_i)$ commun à tous les plans objets. Généralement, on a $f'' \approx 10cm$.

En effet, en utilisant la propagation de Fresnel (1FFT), le pas d'échantillonnage $(p'_x, p'_y)$ sur le plan de destination est donné par le pas d'échantillonnage $(p_x, p_y)$ sur le plan de source tel que

$$\begin{cases} p'_x = \dfrac{\lambda |z|}{N_x p_x} \\ p'_y = \dfrac{\lambda |z|}{N_y p_y} \end{cases}$$

En posant $p_x = p_y = p'_d$, on obtient le pas d'échantillonnage $(p''_x, p''_y)$ dans le plan de l'hologramme par :

$$p''_x = \frac{\lambda f''}{N_x \dfrac{\lambda (z'_d + f'')}{N_x p'_d}} \approx p$$

$$p''_y = \frac{\lambda f''}{N_y \dfrac{\lambda (z'_d + f'')}{N_y p'_d}} \approx p$$

On vérifie donc bien que le pas d'échantillonnage dans le plan de l'hologramme est respecté.

Dans ce troisième mode de réalisation, les ondes lumineuses émises par chaque plan objet sont ainsi propagées numériquement jusqu'au plan virtuel $(P'_i) = (P'_{f''})$, puis propagées de ce plan virtuel jusqu'au plan de l'hologramme et enfin sommées pour obtenir l'hologramme H de la scène, tel que

$$H(x,y) = \sum_d SSF_{-f''} \left\{ SSF_{z'_d + f''} \{ o_d \} \right\} (x,y)$$

Une option avantageuse est de sommer les ondes propagées numériquement jusqu'au plan virtuel $(P'_{f''})$, puis de propager l'onde résultante par une SSF jusqu'au plan de l'hologramme, comme suit :

$$H(x,y) = SSF_{-f''} \left\{ \sum_d SSF_{z'_d + f''} \{ o_d \} \right\} (x,y)$$

La complexité de ce mode de réalisation est donc divisée par deux par rapport au mode de réalisation plus général.

On notera que l'invention qui vient d'être décrite, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).

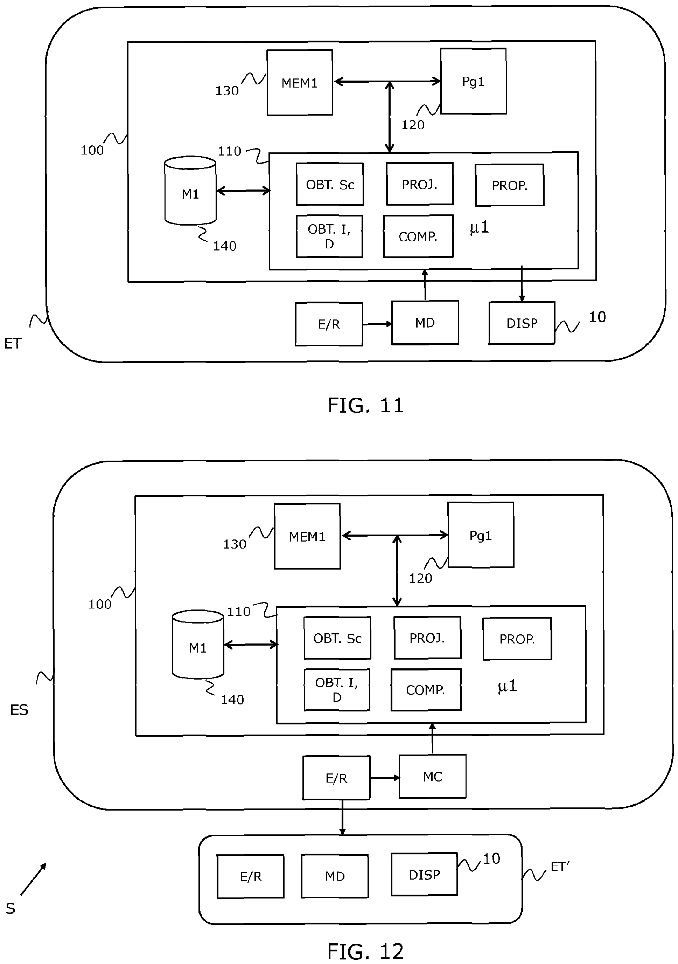

En relation avec la Figure **11,** on présente maintenant un exemple de structure simplifiée d'un dispositif 100 de génération d'un hologramme selon l'invention. Le dispositif 100 met en œuvre le procédé de génération numérique d'un hologramme selon l'invention qui vient d'être décrit.

Par exemple, le dispositif 100 comprend une unité de traitement 110, équipée d'un processeur $\mu 1$, et pilotée par un programme d'ordinateur $Pg_2$ 120, stocké dans une mémoire 130 et mettant en œuvre le procédé de selon l'invention.

A l'initialisation, les instructions de code du programme d'ordinateur Pg$_1$ 120 sont par exemple chargées dans une mémoire RAM avant d'être exécutées par le processeur de l'unité de traitement 110. Le processeur de l'unité de traitement 110 met en œuvre les étapes du procédé décrit précédemment, selon les instructions du programme d'ordinateur 120.

Dans cet exemple de réalisation de l'invention, le dispositif 100 comprend une machine de calcul reprogrammable ou une machine de calcul dédiée, apte à et configurée pour :

- Obtenir une carte d'intensités et une carte de profondeurs de la scène correspondant à un point de vue de l'observateur à partir d'informations de description de la scène;

- Projeter selon un modèle de projection perspective inverse d'une caméra virtuelle colocalisée avec l'observateur, des points de la carte d'intensités sur une pluralité de plans parallèles au plan écran dans un référentiel du plan écran, un plan étant associé à une valeur de profondeur comprise entre une valeur minimale et une valeur maximale de la carte de profondeurs, un point de la carte d'intensités étant projeté sur le plan de la pluralité de plans associé à sa valeur de profondeur correspondante dans la carte de profondeur;

- Compenser une distorsion induite par la lentille convergente sur l'hologramme par modification de la pluralité de plans de la scène, un point d'un dit plan, dit point image d'un point objet par conjugaison de ladite lentille convergente, étant remplacé par le point objet ; et

- depuis la pluralité de plans modifiés, dits plans objets, propager une onde lumineuse échantillonnée complexe par plan vers le plan écran et sommer les ondes lumineuses propagées.

Avantageusement, la machine de calcul est configurée pour mettre en œuvre les modes de réalisation de l'invention qui viennent d'être décrits dans ses différents modes de réalisation. Notamment, elle est apte à propager une onde lumineuse depuis chacun des plans de la pluralité de plans modifiés vers le plan écran en contrôlant le facteur d'échelle entre le plan modifié et le plan écran.

Le dispositif 100 comprend en outre une unité M$_1$ 140 de stockage, telle qu'une mémoire, par exemple de type mémoire tampon, apte à stocker par exemple les cartes d'intensité I et de profondeur construites à partir des informations de description de la scène Sc, la pluralité de plans de la scène obtenus par projection arrière des points des cartes I et D, puis la pluralité de plans modifiés pour compenser la distorsion induite par la lentille 12.

Ces unités sont pilotées par le processeur μ$_1$ de l'unité de traitement 110.

De façon avantageuse, un tel dispositif 100 peut être intégré à un équipement terminal ET, par exemple de type visiocasque. Le dispositif 100 est alors agencé pour coopérer au moins avec les modules suivants du terminal ET :

- un module E/R d'émission/réception de données, par l'intermédiaire duquel les informations de description de la scène 3D sont reçues via un réseau de télécommunications, par exemple un réseau filaire, sans fil ou un réseau hertzien ;

- un dispositif d'affichage DISP 10 apte à restituer l'hologramme généré selon l'invention, comprenant :

  ◦ un écran 11, par exemple de type SLM, placé à une distance prédéterminée des yeux de l'observateur ;

  ◦ une source lumineuse 14, 14' cohérente agencée de sorte à éclairer ledit écran avec une onde plane cohérente, ledit écran étant apte à moduler les ondes lumineuses émises par la source en fonction de l'hologramme ;

  ◦ une lentille convergente 12 placée entre l'écran et ledit observateur de sorte que l'hologramme se forme dans un plan de la lentille ; et

  ◦ un guide d'onde 13 ou un séparateur de faisceaux apte à acheminer les ondes lumineuses modulées par l'écran dans le champ visuel de l'observateur.

Dans ce mode de réalisation de l'invention, toutes les étapes du procédé selon l'invention sont effectuées par le visiocasque. Dans le cas d'une scène virtuelle, elle est transmise sous la forme d'un maillage ou d'un nuage de points au casque.

Dans le cas d'une scène réelle, les cartes d'intensité et de profondeur sont par exemple acquises à l'aide d'une caméra 2D+Z puis transmises sous forme de flux au visiocasque.

Selon une première variante, illustrée par la Figure **12,** on considère un système S, selon lequel le dispositif 100 est intégré à un équipement serveur ES comprenant un module d'émission de données MER, par l'intermédiaire duquel il transmet des données représentatives de l'hologramme généré selon l'invention à un équipement terminal ET' de type visiocasque, agencé, par exemple comme décrit précédemment, pour afficher l'hologramme à l'aide du dispositif d'affichage 10.

Par exemple les données représentatives de l'hologramme sont codées par l'équipement serveur ES dans un module de codage MD, transmises dans un réseau de télécommunications, par exemple sans fil, reçues par le module E/R de l'équipement terminal ET' sous la forme d'un flux de données codées selon une norme de codage telle que HEVC/H.265, AVC/H.264 ou d'une future norme Post-HEVC ou encore dans tout type de codeurs/décodeurs vidéo propriétaire. Dans ce cas, l'équipement terminal ET' comprend en outre un module de décodage MD du flux apte à produire les informations de description de la scène au dispositif 100 selon l'invention.

Selon une deuxième variante, une première partie des étapes du procédé de génération d'un hologramme est réalisée par l'équipement serveur ES et une deuxième partie par l'équipement terminal. Par exemple, l'obtention de la scène par synthèse d'images pour une scène virtuelle ou à partir d'une caméra stéréo ou 2D + z pour une scène réelle, l'obtention des cartes d'intensité et profondeur sont effectuées sur l'équipement serveur, puis transmises à l'équipement terminal, qui réalise les étapes de projection inverse, de compensation et de propagation. L'hologramme est ensuite envoyé au visiocasque sous la forme d'un flux vidéo codé.

Dans ce cas, les cartes d'intensité et de profondeur sont transmises au visiocasque sous la forme d'un flux vidéo codé et l'hologramme est calculé à la volée sur le visiocasque.

L'invention qui vient d'être présentée s'applique notamment à la réalité augmentée/mixte. Il s'agit d'augmenter la réalité telle qu'elle est perçue par un utilisateur d'un visiocasque à l'aide d'hologrammes générés à l'aide du procédé selon l'invention.

## Revendications

1. Procédé de génération numérique d'un hologramme d'une scène tridimensionnelle dans le plan, dit plan écran, d'un écran (11) d'un dispositif d'affichage d'hologramme destiné à être porté par un utilisateur (15), ledit écran étant éclairé par une onde lumineuse cohérente plane, une lentille convergente (12) étant agencée entre l'écran et ledit utilisateur, de sorte que l'hologramme se forme dans le plan de la lentille, ledit procédé comprenant les étapes suivantes :

   - Obtention (E1) d'une carte d'intensités et une carte de profondeurs de la scène correspondant au point de vue de l'utilisateur ;
   - Projection (E2) selon un modèle de projection perspective inverse d'une caméra virtuelle colocalisée avec l'utilisateur, des points de la carte d'intensités sur une pluralité de plans parallèles au plan écran dans un référentiel de l'écran, un plan parmi la pluralité de plans parallèles au plan écran dans le référentiel de l'écran étant associé à une valeur de profondeur comprise entre une valeur minimale et une valeur maximale de la carte de profondeurs, un point de la carte d'intensités étant projeté sur le plan de la pluralité de plans associé à la valeur de profondeur dudit point dans la carte de profondeur;
   - Compensation (E3) d'une distorsion induite par la lentille convergente sur l'hologramme par modification de la pluralité de plans de la scène, un point d'un plan parmi la pluralité de plans de la scène, dit point image d'un point objet par conjugaison de ladite lentille convergente, étant remplacé par ledit point objet ;
   - depuis la pluralité de plans modifiés, dits plans objets, propagation (E4) d'une onde lumineuse échantillonnée complexe vers le plan écran et sommation des ondes lumineuses propagées;

2. Procédé de génération numérique d'un hologramme selon la revendication **1, caractérisé en ce que** l'étape de propagation de l'onde lumineuse émise par un plan objet comprend un contrôle d'un facteur d'échelle entre un pas d'échantillonnage du plan objet et un pas d'échantillonnage du plan écran.

3. Procédé de génération numérique d'un hologramme selon la revendication **2, caractérisé en ce que** la propagation comprend une convolution de l'onde lumineuse émise par le plan objet par un noyau, calculé en fonction du facteur d'échelle.

4. Procédé de génération numérique d'un hologramme selon la revendication **2, caractérisé en ce que** l'étape de propagation comprend une première propagation de l'onde lumineuse émise par le plan objet jusqu'à un plan virtuel intermédiaire, puis une deuxième propagation du plan virtuel intermédiaire jusqu'au plan de l'écran, la première et la deuxième propagation étant réalisées à l'aide d'une transformée, telle que le facteur d'échelle entre un plan de départ et un plan d'arrivée dépend d'une distance entre les plans et **en ce que** le contrôle du facteur d'échelle comprenant un placement du plan virtuel intermédiaire de sorte à respecter le facteur d'échelle entre le plan objet et le plan de l'écran.

**5.** Procédé de génération numérique d'un hologramme selon la revendication **4, caractérisé en ce que** le plan virtuel intermédiaire est placé à une distance du plan de l'écran correspondant à la distance focale d'une caméra virtuelle dont la projection perspective inverse des points de la scène produirait la pluralité de plans modifiés et **en ce que** la sommation des ondes lumineuses propagées est réalisée dans le plan virtuel.

**6.** Dispositif (100) de génération numérique d'un hologramme d'une scène tridimensionnelle dans un plan dit plan écran d'un dispositif (10) d'affichage d'un hologramme destiné à être porté par un utilisateur (15), ledit écran (11) étant éclairé par une source lumineuse cohérente plan, une lentille convergente (12) étant placée entre l'écran et ledit observateur, de sorte que l'hologramme se forme dans le plan de la lentille, ledit dispositif comprenant une machine de calcul dédiée à ou configurée pour :

- Obtenir (OBT. I,D) une carte d'intensités et une carte de profondeurs de la scène correspondant à un point de vue de l'utilisateur ;
- Projeter (PROJ.) selon un modèle de projection perspective inverse d'une caméra virtuelle colocalisée avec l'observateur, des points de la carte d'intensités sur une pluralité de plans parallèles au plan écran dans un référentiel du plan écran, un plan étant associé à une valeur de profondeur comprise entre une valeur minimale et une valeur maximale de la carte de profondeurs, un point de la carte d'intensités étant projeté sur le plan de la pluralité de plans associé à sa valeur de profondeur correspondante dans la carte de profondeur;
- Compenser (COMP.) une distorsion induite par la lentille convergente sur l'hologramme par modification de la pluralité de plans de la scène, un point d'un dit plan, dit point image d'un point objet par conjugaison de ladite lentille convergente, étant remplacé par le point objet ;
- depuis la pluralité de plans modifiés, dits plans objets, propager (PROP.) une onde lumineuse échantillonnée complexe par plan vers le plan écran et sommer les ondes lumineuses propagées.

**7.** Equipement terminal (ET) comprenant un module d'obtention d'informations de description d'une scène tridimensionnelle, un dispositif d'affichage d'un hologramme destiné à être porté par un observateur (15), ledit dispositif comprenant :

- un écran (11), placé à une distance prédéterminée des yeux de l'observateur ;
- une source lumineuse agencée de façon à éclairer ledit écran par une onde lumineuse cohérente plane, ledit écran étant apte à moduler les ondes lumineuses émises par la source en fonction de l'hologramme ;
- une lentille convergente (12) placée entre l'écran et ledit observateur de sorte que l'hologramme se forme dans le plan de la lentille ;
- un guide d'onde (13) ou un séparateur de faisceaux (16) apte à acheminer les ondes lumineuses modulées par l'écran dans le champ visuel de l'observateur **caractérisé en ce qu'**il comprend un dispositif de génération numérique d'hologramme selon la revendication **6.**

**8.** Système (S) comprenant un équipement serveur (ES) et un équipement terminal (ET') de type visiocasque, **caractérisé en ce que** l'équipement serveur comprend un dispositif (100) de génération numérique d'hologramme selon la revendication **6,** un module (MER) d'émission de données représentatives de l'hologramme généré à l'équipement terminal, et **en ce que** l'équipement terminal (ET') comprend un dispositif (10) d'affichage d'un hologramme destiné à être porté par un observateur, ledit dispositif comprenant :

- un écran, placé à une distance prédéterminée des yeux de l'observateur ;
- une source lumineuse agencée de façon à éclairer ledit écran par une onde lumineuse cohérente plane, ledit écran étant apte à moduler les ondes lumineuses émises par la source en fonction de l'hologramme ;
- une lentille convergente placée entre l'écran et ledit observateur de sorte que l'hologramme se forme dans le plan de l'écran ; et
- un guide d'onde ou un séparateur de faisceaux apte à acheminer les ondes lumineuses modulées par l'écran dans le champ visuel de l'observateur.

**9.** Programme d'ordinateur (Pg1) comportant des instructions pour la mise en œuvre du procédé de génération d'un hologramme selon l'une quelconque des revendications 1 à **5,** lorsque ledit programme est exécuté par un processeur.

**10.** Support d'enregistrement lisible par un ordinateur, sur lequel est enregistré un programme d'ordinateur comprenant des instructions de code de programme pour l'exécution des étapes du procédé selon l'une des revendications **1** à **5**.

**Patentansprüche**

**1.** Verfahren zur digitalen Generierung eines Hologramms einer dreidimensionalen Szene in der als Bildschirmebene bezeichneten Ebene eines Bildschirms (11) einer Hologrammanzeigevorrichtung, die dazu bestimmt ist, von einem Benutzer (15) getragen zu werden,

wobei der Bildschirm durch eine ebene kohärente Lichtwelle beleuchtet wird, wobei eine Sammellinse (12) zwischen dem Bildschirm und dem Benutzer angeordnet ist, damit sich das Hologramm in der Ebene der Linse bildet,
wobei das Verfahren die folgenden Schritte aufweist:

- Erhalt (E1) einer Leuchtstärkenkarte und einer Tiefenkarte der Szene, die dem Blickpunkt des Benutzers entsprechen;
- Projektion (E2) der Punkte der Leuchtstärkenkarte gemäß einem inversen perspektivischen Projektionsmodell einer virtuellen, mit dem Benutzer gemeinsam angeordneten Kamera auf eine Anzahl zur Bildschirmebene paralleler Ebenen in einem Bezugssystem des Bildschirms, wobei eine unter der Anzahl zur Bildschirmebene paralleler Ebenen im Bezugssystem des Bildschirms einem Tiefenwert zugeordnet ist, der zwischen einem Minimalwert und einem Maximalwert der Tiefenkarte liegt, wobei ein Punkt der Leuchtstärkenkarte auf die dem Tiefenwert des Punkts in der Tiefenkarte zugeordnete Ebene der Anzahl Ebenen projiziert wird;
- Kompensation (E3) einer durch die Sammellinse in das Hologramm eingebrachten Verzerrung durch Modifizierung der Anzahl Ebenen der Szene, wobei ein als Bildpunkt eines Objektpunkts durch Konjugation der Sammellinse bezeichneter Punkt einer Ebene unter der Anzahl Ebenen der Szene durch den Objektpunkt ersetzt wird;
- Ausbreitung (E4) einer komplexen abgetasteten Lichtwelle von der Anzahl als Objektebenen bezeichneter geänderter Ebenen zur Bildschirmebene hin und Summieren der ausgebreiteten Lichtwellen.

**2.** Verfahren zur digitalen Generierung eines Hologramms gemäß Anspruch 1, **dadurch gekennzeichnet, daß** der Schritt der Ausbreitung der durch eine Objektebene ausgesandten Lichtwelle eine Steuerung eines Maßstabsfaktors zwischen einem Abtastschritt der Objektebene und einem Abtastschritt der Bildschirmebene aufweist.

**3.** Verfahren zur digitalen Generierung eines Hologramms gemäß Anspruch 2, **dadurch gekennzeichnet, daß** die Ausbreitung eine Faltung der von der Objektebene ausgesandten Lichtwelle durch einen in Abhängigkeit vom Maßstabsfaktor berechneten Kern aufweist.

**4.** Verfahren zur digitalen Generierung eines Hologramms gemäß Anspruch 2, **dadurch gekennzeichnet, daß** der Schritt der Ausbreitung eine erste Ausbreitung der von der Objektebene ausgesandten Lichtwelle bis zu einer virtuellen Zwischenebene und dann eine zweite Ausbreitung von der virtuellen Zwischenebene bis zur Ebene des Bildschirms aufweist, wobei die erste und die zweite Ausbreitung mit Hilfe einer Transformierten durchgeführt werden, so daß der Maßstabsfaktor zwischen einer Abgangsebene und einer Ankunftsebene von einer Entfernung zwischen den Ebenen abhängt, und daß die Steuerung des Maßstabsfaktors ein Platzieren der virtuellen Zwischenebene derart aufweist, daß der Maßstabsfaktor zwischen der Objektebene und der Bildschirmebene berücksichtigt wird.

**5.** Verfahren zur digitalen Generierung eines Hologramms gemäß Anspruch 4, **dadurch gekennzeichnet, daß** die virtuelle Zwischenebene in einem Abstand von der Bildschirmebene platziert wird, der dem fokalen Abstand einer virtuellen Kamera entspricht, deren inverse perspektivische Projektion der Punkte der Szene die Anzahl modifizierter Ebenen erzeugt, und daß die Summierung der ausgesandten Lichtwellen in der virtuellen Ebene erfolgt.

**6.** Vorrichtung (100) zur digitalen Generierung eines Hologramms einer dreidimensionalen Szene in einer als Bildschirmebene bezeichneten Ebene einer Hologrammanzeigevorrichtung (10), die dazu bestimmt ist, von einem Benutzer (15) getragen zu werden,
wobei der Bildschirm (11) durch eine ebene kohärente Lichtwelle beleuchtet wird, wobei eine Sammellinse (12) zwischen dem Bildschirm und dem Beobachter angeordnet ist, damit sich das Hologramm in der Ebene der Linse bildet, wobei die Vorrichtung eine Rechenmaschine aufweist, die spezialisiert oder ausgelegt ist für:

- Erhalten (OBT. I,D) einer Leuchtstärkenkarte und einer Tiefenkarte der Szene, die einem Blickpunkt des Benutzers entsprechen;
- Projizieren (PROJ.) der Punkte der Leuchtstärkenkarte gemäß einem inversen perspektivischen Projektionsmodell einer virtuellen, mit dem Beobachter gemeinsam angeordneten Kamera auf eine Anzahl zur Bildschirmebene paralleler Ebenen in einem Bezugssystem des Bildschirms, wobei eine Ebene einem Tiefenwert zugeordnet ist, der zwischen einem Minimalwert und einem Maximalwert der Tiefenkarte liegt, wobei ein Punkt der Leuchtstärkenkarte auf die dem Tiefenwert des Punkts in der Tiefenkarte zugeordnete Ebene der Anzahl Ebenen projiziert wird;
- Kompensieren (COMP.) einer durch die Sammellinse in das Hologramm eingebrachten Verzerrung durch Modifizierung der Anzahl Ebenen der Szene, wobei ein als Bildpunkt eines Objektpunkts durch Konjugation der Sammellinse bezeichneter Punkt einer besagten Ebene durch den Objektpunkt ersetzt wird;
- Ausbreiten (PROP.) einer komplexen abgetasteten Lichtwelle je Ebene von der Anzahl als Objektebenen bezeichneter geänderter Ebenen zur Bildschirmebene hin und Summieren der ausgebreiteten Lichtwellen.

7. Endgerät (ET) mit einem Modul zum Erhalten von Informationen einer Beschreibung einer dreidimensionalen Szene, einer Hologrammanzeigevorrichtung, die dazu bestimmt ist, von einem Beobachter (15) getragen zu werden, wobei die Vorrichtung

   - einen in einer vorbestimmten Entfernung von den Augen des Beobachters platzierten Bildschirm (11),
   - eine Lichtquelle, die so angeordnet ist, daß sie den Bildschirm mit einer ebenen kohärenten Lichtwelle beleuchtet, wobei der Bildschirm geeignet ist, die von der Quelle ausgesandten Lichtwellen in Abhängigkeit vom Hologramm zu modulieren,
   - eine zwischen dem Bildschirm und dem Beobachter so angeordnete Sammellinse (12), daß sich das Hologramm in der Ebene der Linse bildet,
   - einen Wellenleiter (13) oder einen Strahlenteiler (16), der geeignet ist, die durch den Bildschirm modulierten Lichtwellen in das Blickfeld des Beobachters zu bringen,

   aufweist,
   **dadurch gekennzeichnet, daß** es eine Vorrichtung zur digitalen Generierung eines Hologramms gemäß Anspruch 6 aufweist.

8. System (S) mit einer Server-Ausstattung (ES) und einem Endgerät (ET') vom Typ eines Videohelms, **dadurch gekennzeichnet, daß** die Server-Ausstattung eine Vorrichtung (100) zur digitalen Generierung eines Hologramms gemäß Anspruch 6, ein Modul (MER) zum Aussenden von Daten, die für das im Endgerät erzeugte Hologramm repräsentativ sind, aufweist, und daß das Endgerät (ET') eine Hologrammanzeigevorrichtung (10), die dazu bestimmt ist, von einem Beobachter getragen zu werden, aufweist, wobei die Vorrichtung

   - einen in einer vorbestimmten Entfernung von den Augen des Beobachters platzierten Bildschirm,
   - eine Lichtquelle, die so angeordnet ist, daß sie den Bildschirm mit einer ebenen kohärenten Lichtwelle beleuchtet, wobei der Bildschirm geeignet ist, die von der Quelle ausgesandten Lichtwellen in Abhängigkeit vom Hologramm zu modulieren,
   - eine zwischen dem Bildschirm und dem Beobachter so angeordnete Sammellinse, daß sich das Hologramm in der Ebene des Bildschirms bildet, und
   - einen Wellenleiter oder einen Strahlenteiler, der geeignet ist, die durch den Bildschirm modulierten Lichtwellen in das Blickfeld des Beobachters zu bringen, aufweist.

9. Computerprogramm (Pg1), das Befehle für die Durchführung des Verfahrens zur Generierung eines Hologramms gemäß einem der Ansprüche 1 bis 5, wenn das Programm durch einen Prozessor durchgeführt wird, aufweist.

10. Von einem Computer lesbares Aufzeichnungsmedium, auf dem ein Computerprogramm aufgezeichnet ist, das Programmcodebefehle für die Durchführung der Schritte des Verfahrens gemäß einem der Ansprüche 1 bis 5 aufweist.

**Claims**

1. A method for digitally generating a hologram of a three-dimensional scene in the plane, called screen plane, of a screen (11) of a hologram display device intended to be worn by a user (15), said screen being illuminated by a plane coherent light wave, a convergent lens (12) being arranged between the screen and said user, such that the hologram is formed in the plane of the lens, said method comprising the following steps:

- Obtaining (E1) an intensity map and a depth map of the scene corresponding to the viewpoint of the user;
- Projecting (E2) according to an inverted perspective projection model of a virtual camera co-located with the user, the points of the intensity map on a plurality of planes parallel to the screen plane in a reference frame of the screen, a plane among the plurality of planes parallel to the screen plane in the reference frame of the screen being associated with a depth value of between a minimum value and a maximum value of the depth map, a point of the intensity map being projected on the plane of the plurality of planes associated with the depth value of said point in the depth map;
- Compensating (E3) for a distortion induced by the convergent lens on the hologram by modifying the plurality of planes of the scene, a point of a plane among the plurality of planes of the scene, called image point of an object point by conjugation of said convergent lens, being replaced by said object point;
- from the plurality of modified planes, called object planes, propagating (E4) a complex sampled light wave to the screen plane and summing the propagated light waves.

2. The method for digitally generating a hologram according to claim **1, characterised in that** the step of propagating the light wave emitted by an object plane comprises a control of a scale factor between a sampling interval of the object plane and a sampling interval of the screen plane.

3. The method for digitally generating a hologram according to claim **2, characterised in that** propagating comprises a convolution of the light wave emitted by the object plane by a kernel, calculated according to the scale factor.

4. The method for digitally generating a hologram according to claim **2, characterised in that** the step of propagating comprises a first propagation of the light wave emitted by the object plane until an intermediate virtual plane, then a second propagation from the intermediate virtual plane until the plane of the screen, the first and the second propagation being achieved using a transform, such that the scale factor between a starting plane and an arrival plane depends on a distance between the planes and **in that** the control of the scale factor comprising a placing of the intermediate virtual plane so as to respect the scale factor between the object plane and the plane of the screen.

5. The method for digitally generating a hologram according to claim **4, characterised in that** the intermediate virtual plane is placed at a distance from the plane of the screen corresponding to the focal distance of a virtual camera, of which the inverted perspective projection of the points of the scene would produce the plurality of modified planes and **in that** the summing of the propagated light waves is achieved in the virtual plane.

6. A device (100) for digitally generating a hologram of a three-dimensional scene in a plane called screen plane of a device (10) for displaying a hologram intended to be worn by a user (15), said screen (11) being illuminated by a plane coherent light source, a convergent lens (12) being placed between the screen and said observer, such that the hologram is formed in the plane of the lens, said device comprising a computation machine, dedicated to or configured to:

- Obtain (OBT. I,D) an intensity map and a depth map of the scene corresponding to a viewpoint of the user;
- Project (PROJ.) according to an inverted perspective projection model of a virtual camera co-located with the observer, points of the intensity map on a plurality of planes parallel to the screen plane in a reference frame of the screen plane, a plane being associated with a depth value of between a minimum value and a maximum value of the depth map, a point of the intensity map being projected on the plane of the plurality of planes associated with the corresponding depth value thereof in the depth map;
- Compensate (COMP.) for a distortion induced by the convergent lens on the hologram by modifying the plurality of planes of the scene, a point of one said plane, called image point of an object plane by conjugation of said convergent lens, being replaced by the object point;
- From the plurality of modified planes, called object planes, propagate (PROP.) a complex sampled light wave per plane to the screen plane and sum the propagated light waves.

7. A terminal equipment (ET) comprising a module for obtaining description information of a three-dimensional scene, a device for displaying a hologram intended to be worn by an observer (15), said device comprising:

- a screen (11), placed at a predetermined distance from the eyes of the observer;
- a light source arranged so as to illuminate said screen by a plane coherent light wave, said screen being capable of modulating the light waves emitted by the source depending on the hologram;
- a convergent lens (12) placed between the screen and said observer such that the hologram is formed in the plane of the screen;
- a waveguide (13) or a beam splitter (16) capable of transporting the light waves modulated by the screen in the visual field of the observer
**characterised in that** it comprises a hologram digitally generating device according to claim **6.**

8. A system (S) comprising an item of server equipment (ES) and an item of terminal equipment (ET') of head mounted display type, **characterised in that** the item of server equipment comprises a hologram digitally generating device (100) according to claim **6,** a module (MER) for transmitting data representative of the generated hologram to the item of terminal equipment, and **in that** the item of terminal equipment (ET') comprises a device (10) for displaying a hologram intended to be worn by an observer, said device comprising:

- a screen, placed at a predetermined distance from the eyes of the observer;
- a light source arranged so as to illuminate said screen by a plane coherent light wave, said screen being capable of modulating the light waves emitted by the source depending on the hologram;
- a convergent lens placed between the screen and said observer such that the hologram is formed in the plane of the screen; and
- a waveguide or a beam splitter capable of transporting the light waves modulated by the screen in the visual field of the observer.

9. A computer program (Pg1) comprising instructions for the implementation of the method for generating a hologram according to any one of claims **1** to **5,** when said program is executed by a processor.

10. A recording medium which can be read by a computer, on which is recorded a computer program comprising program code instructions for the execution of the steps of the method according to one of claims **1** to **5.**

FIG. 1

FIG. 2

FIG. 3

FIG. 4

FIG. 5

FIG. 6

FIG. 7

FIG. 8

FIG. 9

FIG. 10

FIG. 11

FIG. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **T. ICHIKAWA et al.** CGH calculation with the ray tracing method for the Fourier transform optical system. *Opt. Express,* Décembre 2013, vol. 21 (26), 32019-32031
- **GILLES ANTONIN et al.** Computer generated hologram from Multiview-plus-Depth data considering specular reflections. *2016 IEEE International Conférence on Multimedia & Expo Workshops (ICMEW),* 1-6

- **RESTREPO et al.** Magnified reconstruction of digitally recorded holograms by Fresnel-Bluestein transform. *Appl. Opt.,* Novembre 2010, vol. 49 (33), 6430-6435